# EUROPÄISCHE PATENTSCHRIFT

(11) **EP 4 372 319 B1**
(45) Veröffentlichungstag und Bekanntmachung des Hinweises auf die Patenterteilung: **07.05.2025**
(21) Anmeldenummer: 22207940.2
(22) Anmeldetag: 17.11.2022
(51) Int. Cl.: G01D 5/244

(54) **POSITIONSMESSSYSTEM UND VERFAHREN ZUR BITSERIELLEN MITTELWERTBILDUNG VON POSITIONSWERTEN**
POSITION MEASUREMENT SYSTEM AND METHOD FOR THE SERIAL AVERAGING OF POSITION VALUES
SYSTÈME DE MESURE DE POSITION ET PROCÉDÉ POUR LA MOYENNE DES VALEURS DE POSITION EN SÉRIE DE BITS

(43) Veröffentlichungstag der Anmeldung: 22.05.2024
(73) Patentinhaber: Dr. Johannes Heidenhain GmbH, 83301 Traunreut (DE)
(72) Erfinder: KREUZER, Stephan, 83362 Surberg-Ettendorf (DE)

(56) Entgegenhaltungen:
- WO-A2-2006/044960
- DE-A1- 102017 216 666

## Beschreibung

### GEBIET DER TECHNIK

Die vorliegende Erfindung betrifft eine Vorrichtung und ein Verfahren zur Mittelwertbildung von Positionswerten nach den Ansprüchen 1, bzw. 6. Sie ist auf dem Gebiet der Positionsbestimmung in der Automatisierungstechnik anwendbar, insbesondere dort, wo Fehler in der Positionsmessung, die auf mechanische Unzulänglichkeiten zurückzuführen sind, durch redundante Messungen an verschiedenen Messstellen und anschließende Mittelung der Positionswerte, eliminiert werden sollen.

### STAND DER TECHNIK

Im Stand der Technik sind absolute Positionsmessgeräte bekannt, die eine serielle Datenschnittstelle zur Kommunikation mit einem Steuergerät aufweisen, d.h. Geräte, die nach Eintreffen eines Positionsanforderungsbefehls bei der Datenschnittstelle eine Absolutposition messen und anschließend den Messwert in Form eines Datenpakets seriell über die Datenschnittstelle an das Steuergerät ausgeben. Prinzipbedingt weist ein derartiges System aus Sicht des Steuergeräts zwischen dem Senden des Positionsanforderungsbefehls und dem Empfang des Messwerts eine Verzögerungszeit auf, die wesentlich von der Übertragungsdauer des Datenpakets bestimmt wird. Da diese Messwerte häufig als Positions-IstWerte für eine Antriebsregelung verwendet werden, ist es eine ständige Anforderung, dass diese Verzögerungszeit möglichst kurz ist. Soll nun in einem Positionsmesssystem vor der Übertragung des Messwerts eine Mittelung mehrerer Messwerte von unterschiedlichen Messstellen erfolgen und kann auf eine serielle Übertragung nicht verzichtet werden, dann erhöht sich die Verzögerungszeit noch einmal wesentlich.

Die EP 2 551 645 A2 beschreibt ein Positionsmesssystem, das als Winkelmessgerät ausgeführt ist, bei dem mehrere Winkelwerte an verschiedenen, über den Umfang eines Teilungsträgers verteilten, Messstellen gemessen und seriell an eine Kontrolleinheit übertragen werden. Dort wird ein korrigierter Winkelwert bestimmt, der schließlich, ebenfalls seriell, an eine Folgeelektronik ausgegeben wird. Es wird vorgeschlagen, zur Verringerung der Verzögerungszeit den korrigierten Winkelwert aus Messwerten zu berechnen, die bereits vor dem Eintreffen eines Positionsanforderungsbefehls gemessen wurden. Es gibt jedoch Anwendungsfälle, bei denen nur aktuell gemessene Messwerte zur Bildung des korrigierten Messwerts verwendet werden sollen.

DE 10 2017 216666 A1 offenbart einen Positionsencoder mit seriell gesteuerter Positionsdatenanfrage und Mittelwertbildung.

### ZUSAMMENFASSUNG DER ERFINDUNG

Es ist Aufgabe der vorliegenden Erfindung, ein Positionsmesssystem mit einer verbesserten Mittelwertbildung zu schaffen.

Diese Aufgabe wird gelöst durch ein Positionsmesssystem nach Anspruch 1.

Es wird ein Positionsmesssystem vorgeschlagen, umfassend eine Anzahl von 2^x Positionsaufnehmern, wobei x eine positive ganze Zahl ist, und einen Positionsrechner, wobei der Positionsrechner eine Systemschnittstelle, ein serielles Rechenwerk und je Positionsaufnehmer eine Rechnerschnittstelle umfasst, wobei
- die Rechnerschnittstellen über Datenübertragungskanäle mit korrespondierenden Geräteschnittstellen der Positionsaufnehmer zum Zwecke einer Datenübertragung verbunden sind,
- die Systemschnittstelle über einen externen Datenübertragungskanal mit einem Steuergerät verbindbar ist und ausgestaltet ist, externe Positionsanforderungsbefehle, die vom Steuergerät eintreffen an die Rechnerschnittstellen weiterzuleiten und gemittelte Positionswerte seriell an das Steuergerät auszugeben,
- die Rechnerschnittstellen ausgestaltet sind, als Folge eines Eintreffens eines externen Positionsanforderungsbefehls wiederum Positionsanforderungsbefehle an die Positionsaufnehmer zu senden,
- die Positionsaufnehmer ausgestaltet sind, als Folge eines Eintreffens eines Positionsanforderungsbefehls einen Positionswert mit einer Wortbreite von n Bit zu generieren und seriell über die Geräteschnittstelle an den Positionsrechner auszugeben,
- die Rechnerschnittstellen weiter ausgestaltet sind, den Positionswert zu empfangen und seriell an das serielle Rechenwerk auszugeben und
- das serielle Rechenwerk ausgestaltet ist, aus den Positionswerten seriell den gemittelten Positionswert zu berechnen und seriell an die Systemschnittstelle zur Ausgabe an das Steuergerät auszugeben.

Weiter ist es Aufgabe der vorliegenden Erfindung, ein verbessertes Verfahren zur Mittelwertbildung anzugeben.

Diese Aufgabe wird gelöst durch ein Verfahren nach Anspruch 6.

Es wird ein Verfahren zur Mittelwertbildung in einem Positionsmesssystem vorgeschlagen, umfassend eine Anzahl von 2^x Positionsaufnehmern, wobei x eine positive ganze Zahl ist, und einen Positionsrechner, wobei der Positionsrechner eine Systemschnittstelle, ein serielles Rechenwerk und je Positionsaufnehmer eine Rechnerschnittstelle umfasst, wobei
- die Rechnerschnittstellen über Datenübertragungskanäle mit korrespondierenden Geräteschnittstellen der Positionsaufnehmer zum Zwecke einer Datenübertragung verbunden sind,
- die Systemschnittstelle über einen externen Datenübertragungskanal mit einem Steuergerät verbunden wird und von der Systemschnittstelle externe Positionsanforderungsbefehle, die vom Steuergerät eintreffen, an die Rechnerschnittstellen weitergeleitet werden und gemittelte Positionswerte seriell an das Steuergerät ausgegeben werden,
- von den Rechnerschnittstellen als Folge eines Eintreffens eines externen Positionsanforderungsbefehls wiederum Positionsanforderungsbefehle an die Positionsaufnehmer gesendet werden,
- in den Positionsaufnehmern als Folge eines Eintreffens eines Positionsanforderungsbefehls ein Positionswert mit einer Wortbreite von n Bit zu generiert und seriell über die Geräteschnittstelle an den Positionsrechner ausgegeben wird,
- der Positionswert von der jeweiligen Rechnerschnittstelle empfangen und seriell an das serielle Rechenwerk ausgegeben wird und
- im seriellen Rechenwerk aus den Positionswerten seriell der gemittelte Positionswert berechnet und seriell an die Systemschnittstelle zur Ausgabe an das Steuergerät ausgegeben wird.

Vorteilhafte Ausgestaltungen ergeben sich aus den von den Ansprüchen 1 und 6 abhängigen Ansprüchen, sowie aus der nachfolgenden Beschreibung vorteilhafter Ausführungsbeispiele.

### KURZE BESCHREIBUNG DER ZEICHNUNGEN

Es zeigt
- Figur 1: ein Blockdiagramm eines erfindungsgemäßen Positionsmesssystems in Verbindung mit einem Steuergerät,
- Figur 2: ein Blockdiagramm einer Ausführungsform eines seriellen Rechenwerks,
- Figur 3: ein Signaldiagramm zur Mittelwertbildung im seriellen Rechenwerk 25 nach Figur 2,
- Figur 4: ein Blockdiagramm eines erfindungsgemäßen Positionsmesssystems in Verbindung mit einem Steuergerät,
- Figur 5: ein Blockdiagramm einer weiteren Ausführungsform eines seriellen Rechenwerks,
- Figur 6: ein Signaldiagramm zur Mittelwertbildung im seriellen Rechenwerk 125 nach Figur 5 und
- Figur 7: ein Signaldiagramm zur Mittelwertbildung im seriellen Rechenwerk 125 nach Figur 5 im Falle einer Wertebereichsüberschreitung.

### BESCHREIBUNG DER AUSFÜHRUNGSFORMEN

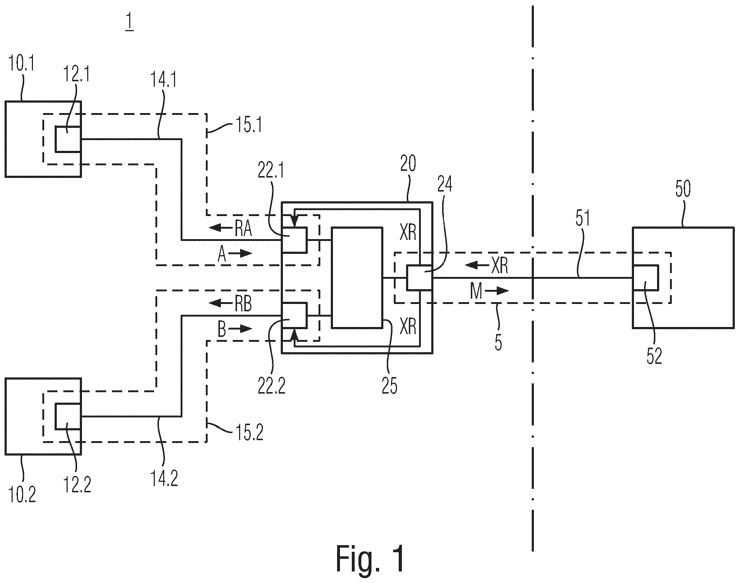

Figur 1 zeigt ein Blockdiagramm eines erfindungsgemäßen Positionsmesssystems 1 in Verbindung mit einem Steuergerät 50. Das Positionsmesssystem 1 umfasst zwei Positionsaufnehmer 10.1, 10.2, sowie einen Positionsrechner 20, wobei die Positionsaufnehmer 10.1, 10.2 je mit dem Positionsrechner 20 über einen Datenübertragungskanal 14.1, 14.2 zum Zwecke der Kommunikation verbunden sind.

Die Positionsaufnehmer 10.1, 10.2 weisen je eine Geräteschnittstelle 12.1, 12.2 auf, die jeweils über einen Datenübertragungskanal 14.1, 14.2 mit korrespondierenden Rechnerschnittstellen 22.1, 22.2 des Positionsrechners 20 verbunden sind. Somit bilden die erste Rechnerschnittstelle 22.1, der erste Datenübertragungskanal 14.1 und die erste Geräteschnittstelle 12.1 eine erste Schnittstellenverbindung 15.1 zwischen dem Positionsrechner 20 und dem ersten Positionsaufnehmer 10.1. Ebenso bilden die zweite Rechnerschnittstelle 22.2, der zweite Datenübertragungskanal 14.2 und die zweite Geräteschnittstelle 12.2 eine zweite Schnittstellenverbindung 15.2 zwischen dem Positionsrechner 20 und dem zweiten Positionsaufnehmer 10.2. Mit Vorteil sind die Schnittstellenverbindungen 15.1, 15.2 gleich ausgeführt.

Die Schnittstellenverbindungen 15.1, 15.2 sind jeweils ausgestaltet zur Übertragung von Positionsanforderungsbefehlen RA, RB vom Positionsrechner 20 zu den zugehörigen Positionsaufnehmern 10.1, 10.2 und zur Übertragung von infolge des Eintreffens eines Positionsanforderungsbefehls von den Positionsaufnehmern 10.1, 10.2 gemessenen Positionswerten A, B zum Positionsrechner 20. Die Übertragung der Positionswerte A, B über die jeweiligen Schnittstellenverbindungen 15.1, 15.2 erfolgt mit der gleichen Übertragungsrate.

Je nach Ausführung der Schnittstellenverbindungen 15.1, 15.2 kann ein Positionsanforderungsbefehl RA, RB durch ein beliebiges Signal, bzw. eine beliebige Signalfolge repräsentiert sein, beispielsweise durch eine definierte Signalflanke, vorzugsweise zu Beginn einer Datenübertragung, oder durch ein Bit oder eine Bitfolge als Teil eines seriellen Datenpakets.

Die gemessenen Positionswerte A, B werden in Form von binär codierten Datenworten mit einer Wortbreite von n Bit bitseriell übertragen, wobei n in der Praxis größer oder gleich 12 ist. Die Übertragung der Positionswerte A, B beginnt mit dem niederwertigsten Bit ("least significant bit", LSB) und endet mit dem höchstwertigen Bit ("most significant bit", MSB).

Jeder der Positionsaufnehmer 10.1, 10.2 ist ausgestaltet zur Durchführung einer Positionsmessung und zur Bereitstellung und Ausgabe eines Positionswertes A, B. So kann ein Positionsaufnehmer 10.1, 10.2 ein Drehgeber, Winkelmessgerät oder Längenmessgerät sein. Es kann auch eine Mehrzahl von Positionsaufnehmern in einem Positionsmessgerät vorhanden sein, die die Positionswerte A, B durch Abtastung einer gemeinsamen Messteilung ermitteln.

Der Positionsrechner 20 weist eine Systemschnittstelle 24 auf, über die das Positionsmesssystem 1 mittels eines externen Datenübertragungskanals 51 mit einer Steuerungsschnittstelle 52 des Steuergeräts 50 verbindbar ist. Die Systemschnittstelle 24 schließt somit das Positionsmesssystem 1 ab, der externe Datenübertragungskanal 2 und das Steuergerät 50 sind nicht vom Positionsmesssystem 1 umfasst. In dem Fall, dass ein Steuergerät 50 mit dem Positionsmesssystem 1 verbunden ist, bilden die Systemschnittstelle 24, der externen Datenübertragungskanal 51 und die Steuerungsschnittstelle 52 eine externe Schnittstellenverbindung 5.

Die Systemschnittstelle 24 ist ausgestaltet zum Empfang von externen Positionsanforderungsbefehlen XR, die vom Steuergerät 50 über die externe Schnittstellenverbindung 5 zum Positionsrechner 20 übertragen werden. Weiter ist die Systemschnittstelle 24 ausgestaltet zur Ausgabe von infolge des Eintreffens eines externen Positionsanforderungsbefehls im Positionsrechner 20 generierten gemittelten Positionswertes M über die externe Schnittstellenverbindung 5 zum Steuergerät 50. Dabei weist die Systemschnittstelle 24 mit Vorteil die gleiche Datenübertragungsrate auf wie die Geräteschnittstellen 12.1, 12.2.

Je nach Ausführung der externen Schnittstellenverbindung 5 kann ein externer Positionsanforderungsbefehl XR durch ein beliebiges Signal, bzw. eine beliebige Signalfolge repräsentiert sein, beispielsweise durch eine definierte Signalflanke, vorzugsweise zu Beginn einer Datenübertragung, oder durch ein Bit oder eine Bitfolge als Teil eines seriellen Datenpakets.

Der externe Positionsanforderungsbefehl XR wird im Positionsrechner 20 unmittelbar an die Geräteschnittstellen 12.1, 12.2 weitergeleitet. Diese sind jeweils ausgestaltet zur Übertragung von Positionsanforderungsbefehlen RA, RB vom Positionsrechner 20 zu den zugehörigen Positionsaufnehmern 10.1, 10.2 als Folge des Eintreffens eines externen Positionsanforderungsbefehls XR.

Die generierten gemittelten Positionswerte M werden in Form von binär codierten Datenworten bit-seriell übertragen. Die Übertragung der gemittelten Positionswerte M beginnt wiederum mit dem niederwertigsten Bit ("least significant bit", LSB) und endet mit dem höchstwertigen Bit ("most significant bit", MSB).

Erfindungsgemäß umfasst der Positionsrechner 20 ein serielles Rechenwerk 25. Dem seriellen Rechenwerk 25 sind von den Positionsaufnehmern 10.1, 10.2 eintreffende Positionswerte A, B zugeführt. Das serielle Rechenwerk 25 ist ausgestaltet, die Positionswerte A, B seriell zum gemittelten Positionswert M zu verarbeiten und den gemittelten Positionswert M wiederum seriell an die Systemschnittstelle 24 zur Ausgabe an das Steuergerät 50 weiterzuleiten. Auf diese Weise beginnen sowohl die Berechnung des gemittelten Positionswerts M und auch dessen Ausgabe bereits zu einem Zeitpunkt, zu dem die Positionswerte A, B noch nicht vollständig empfangen wurden.

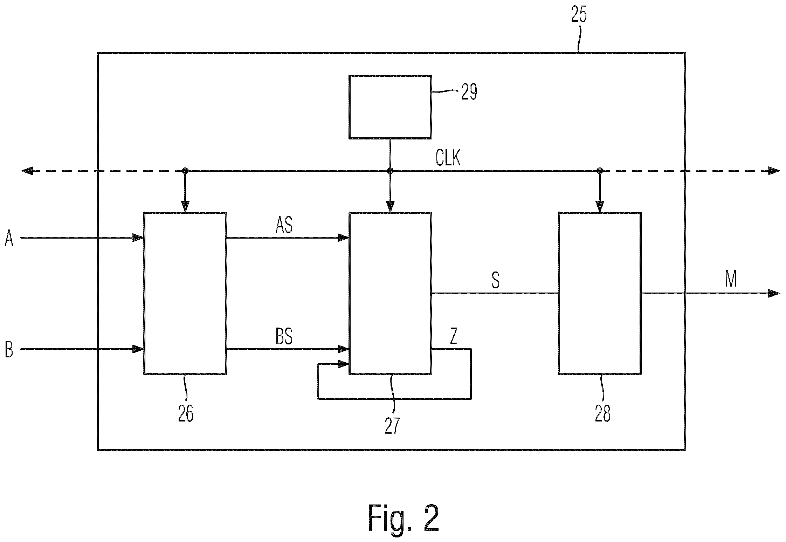

Figur 2 zeigt ein Blockdiagramm einer Ausführungsform eines seriellen Rechenwerks 25. Es umfasst eine Eingangsstufe 26, einen Addierer 27 und eine Ausgangsstufe 28.

Die von den Positionsaufnehmern 10.1, 10.2 eintreffenden Positionswerte A, B sind der Eingangsstufe 26 zugeführt. Die Eingangsstufe 26 ist geeignet ausgestaltet, um die seriell eintreffenden Positionswerte A, B zeitlich gleichzuschalten und die resultierenden synchronisierten Positionswerte AS, BS bitsynchron zum Addierer 27 auszugeben. Dies ist dann notwendig, wenn nicht gewährleistet werden kann, dass die Positionswerte A, B exakt gleichzeitig beim Positionsrechner 20 eintreffen, d.h. einer der Positionswerte A, B gegenüber dem anderen eine zeitliche Verzögerung aufweist. Die Eingangsstufe 26 verzögert den zuerst eintreffenden Positionswert A, B solange, bis der zweite der Positionswerte A, B eintrifft und gibt sie, wiederum seriell, synchron als synchronisierte Positionswerte AS, BS, an den Addierer 27 aus. Zur Verzögerung können die zu verzögernden Positionswerte A, B in first-in-first-out Speicherbausteinen (FIFO) zwischengespeichert werden.

Der Addierer 27 addiert das jeweils aktuelle Bit der synchronisierten Positionswerte AS, BS unter Berücksichtigung eines Übertrag-Bits Z des vorangegangenen Addiervorgangs und gibt das resultierende Bit als Ergebnisbit eines Summenwerts S an die Ausgangsstufe 28, sowie ein aktualisiertes Übertrag-Bit Z an einen entsprechenden Eingang des Addierers 27 aus.

Die Ausgangsstufe 28 bildet schließlich den gemittelten Positionswert M des seriell eintreffenden Summenwerts S. Die hierfür erforderliche Division durch 2 erfolgt einfach durch Nicht-Ausgabe des zuerst eintreffenden Bits des Summenwerts S, also des LSB. Da es also nicht erforderlich ist, dass der Summenwert S vollständig in der Ausgangsstufe 28 vorliegt, bis der gemittelte Positionswert M gebildet werden kann, kann die Ausgabe des gemittelten Positionswerts M beginnen, noch während die höherwertigen Bits der synchronisierten Positionswerte AS, BS addiert werden.

Mit Vorteil ist das serielle Rechenwerk 25 als digitale Zustandsmaschine ausgeführt. Ein hierfür notwendiges Taktsignal CLK kann dem seriellen Rechenwerk 25 von außen zugeführt sein. In einer bevorzugten Ausführungsform umfasst das serielle Rechenwerk 25 einen Taktgenerator 29, der das Taktsignal CLK der Eingangsstufe 26, dem Addierer 27 und der Ausgangsstufe 28 zur Verfügung stellt. Darüber hinaus können auch die diversen Schnittstellen (Rechnerschnittstelle 22.1, 22.2, Systemschnittstelle 24) mit dem Taktsignal CLK versorgt sein, so dass alle Verfahrensschritte in den verschiedenen Komponenten synchron zum Taktsignal CLK, oder einem vom Taktsignal CLK abgeleiteten Taktsignal ablaufen.

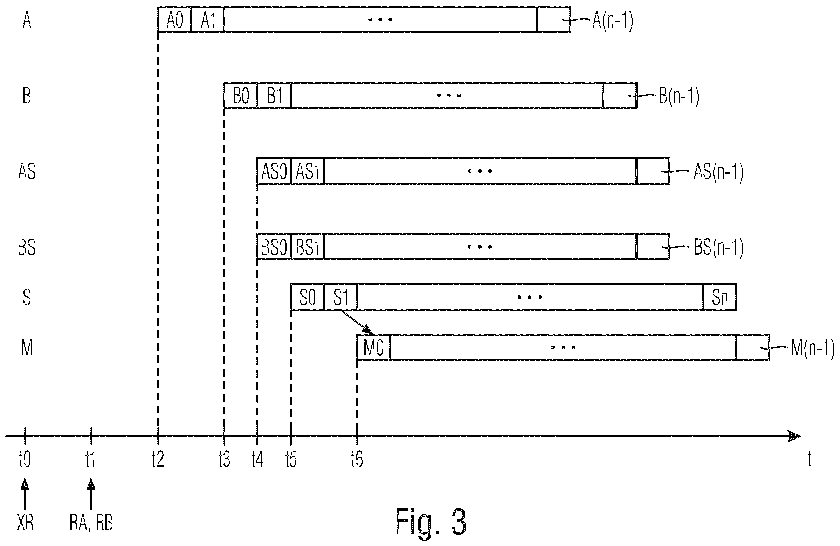

Figur 3 zeigt ein Signaldiagramm zur Mittelwertbildung im seriellen Rechenwerk 25 nach Figur 2.

Zu einem Zeitpunkt t0 trifft ein externer Positionsanforderungsbefehl XR bei der Systemschnittstelle 24 ein. Dieser wird an die Rechnerschnittstellen 12.1, 12.2 weitergeleitet, die daraufhin zu einem Zeitpunkt t1 Positionsanforderungsbefehle RA, RB an die Rechnerschnittstellen 22.1, 22.2 ausgibt.

Ab einem Zeitpunkt t2 trifft das niederwertigste Bit A0 des ersten Positionswerts A bei der Eingangsstufe 26 des seriellen Rechenwerks 25 ein. Diese verzögert die Ausgabe an den Addierer 27, bis zu einem Zeitpunkt t3 das niederwertigste Bit B0 des zweiten Positionswerts B eintrifft.

Ab einem Zeitpunkt t4 beginnt dann die zeitgleiche, synchrone Ausgabe der beiden synchronisierten Positionswerte AS, BS an den Addierer 27. Die Ausgabe erfolgt bitseriell mit steigender Wertigkeit der Bits beginnend mit dem niederwertigsten Bit AS0, bzw. BS0, bis hin zum höchstwertigsten Bit AS(n-1), bzw. BS(n-1). Mit dem Buchstaben n sei hierbei die Anzahl der Bits der Positionswerte A, B, bzw. der synchronisierten Positionswerte AS, BS (Breite der jeweiligen Datenworte) bezeichnet. Der Addierer 27 bildet durch bitserielle Addition der eintreffenden Bits der Positionswerte AS, BS unter Berücksichtigung eines Übertrag-Bits Z einen Summenwert S, wobei das Übertrag-Bit Z der letzten Rechenoperation ein höchstwertiges Bit Sn bildet. Der Summenwert S wird ab dem Zeitpunkt t5 bitseriell an die Ausgangsstufe 28 ausgegeben. Da das geforderte Ergebnis der gemittelte Positionswert M der Positionswerte A, B ist, erfolgt in der Ausgangsstufe 28 eine Division durch die Anzahl der Positionswerte A, B, also 2, einfach indem das niederwertigste Bit S0 des Summenwertes S nicht ausgegeben wird. Somit ist der gemittelte Positionswert M durch die Bits S1 bis Sn gebildet, die ab einem Zeitpunkt t6 als Bits M0 bis M(n-1) des gemittelten Positionswerts M bitseriell an die Systemschnittstelle 24 ausgegeben werden. Die Wortbreite des gemittelten Positionswerts M entspricht damit der Wortbreite der ursprünglichen Positionswerte A, B.

Die Ausgabe des gemittelten Positionswerts M über die Systemschnittstelle 24 erfolgt mit Vorteil innerhalb eines Datenpakets. Um Teile des Datenpakets, die dem gemittelten Positionswert M vorauseilen, möglichst früh ausgeben zu können, ist es vorteilhaft, wenn das serielle Rechenwerk 25, insbesondere die Eingangsstufe 26, zu einem geeigneten Zeitpunkt, beispielsweise zum Zeitpunkt t3, wenn beide Positionswerte A, B bei der Eingangsstufe angekommen sind, ein Signal an die Systemschnittstelle 24 sendet und damit das Eintreffen des gemittelten Positionswerts M ankündigt. Auf diese Weise kann gegebenenfalls eine Startsequenz (z.B. Startbit) des Datenpakets bereits ausgegeben werden, bevor das niederwertigste Bit M0 des gemittelten Positionswerts M eintrifft. Um einen nahtlosen Übergang von der Startsequenz zum gemittelten Positionswert M zu erreichen, ist es vorteilhaft, wenn, wie oben bereits erwähnt, auch die Systemschnittstelle 24 synchron im Zeitraster des Taktsignals CLK arbeitet.

Nach Ausgabe des gemittelten Positionswerts M kann die Systemschnittstelle 24 ggf. noch weitere Informationen übertragen und das Datenpaket schließlich mit einer Endsequenz abschließen.

Es sei an dieser Stelle auch darauf hingewiesen, dass auch die Positionswerte A, B in der Praxis üblicherweise als Teil eines Datenpakets bei den Rechnerschnittstellen 22.1, 22.2 eintreffen. Im Rahmen der vorliegenden Erfindung wird nur auf die Verarbeitung der Positionswerte A, B eingegangen, die Behandlung der übrigen Teile der Datenpakete, wie Startsequenz, Zusatzinformationen und Endsequenz wird nicht weiter ausgeführt.

Das anhand der Figuren 1 bis 3 beschriebene Ausführungsbeispiel ist geeignet für Positionsmesssysteme mit einer Anzahl von 2^x Positionsaufnehmern, wobei x eine positive ganze Zahl ist. Dadurch ist gewährleistet, dass die abschließende Divisionsoperation durch die Nicht-Ausgabe einer Anzahl von x niederwertigsten Bits erfolgen kann. Dies wiederum ermöglicht den Beginn der bitseriellen Ausgabe des gemittelten Positionswerts M mit dem niederwertigsten Bit M0 (LSB) noch bevor die Addition der Positionswerte A, B abgeschlossen ist.

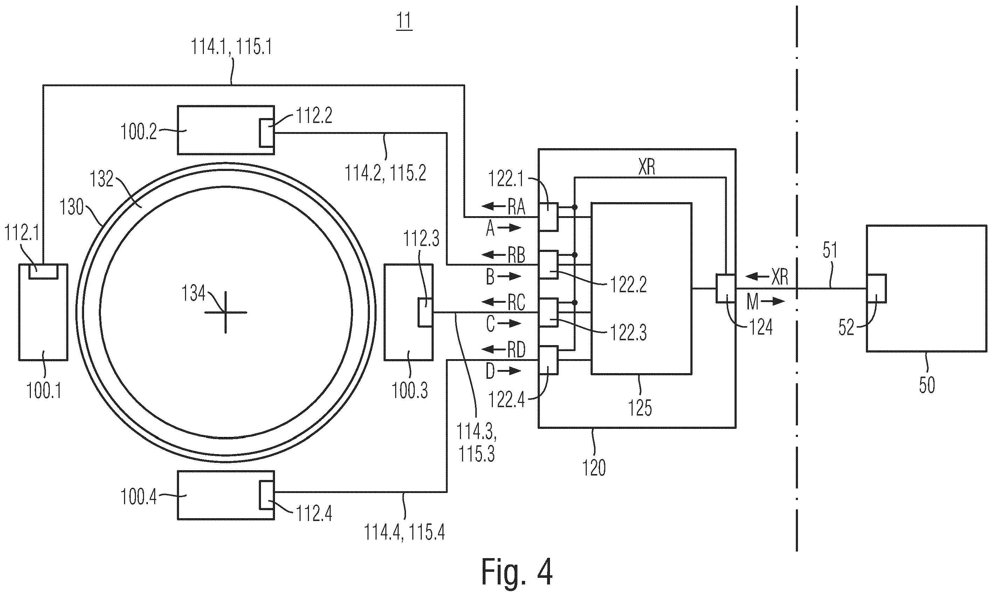

Figur 4 zeigt ein Blockdiagramm einer weiteren erfindungsgemäßen Ausführungsform eines erfindungsgemäßen Positionsmesssystems 11 in Verbindung mit einem Steuergerät 50. Das Positionsmesssystem 11 ist hier als Winkelmessgerät ausgeführt und umfasst vier Positionsaufnehmer 100.1, 100.2, 100.3, 100.4, die jeweils eine auf einem Teilungsträger 130 angeordnete Teilungsspur 132 abtasten, sowie einen Positionsrechner 120.

Die im Folgenden beschriebene Ausführungsform ist anwendbar für Positionsmesssysteme, deren Positionsaufnehmer 100.1, 100.2, 100.3, 100.4 Positionswerte A, B, C, D mit einer Wortbreite von n Bit und einem Wertebereich von 0 bis (2^n)-1 generieren, wobei n eine positive ganze Zahl ist. In der Praxis übliche Werte für den Wertebereich erhält man, wenn n größer oder gleich 12 ist.

Der Teilungsträger 130 ist als kreisrunde Scheibe ausgeführt, die in bekannter Weise drehfest mit einer Welle (nicht dargestellt) verbindbar ist und zusammen mit der Welle um ihren Drehmittelpunkt 134 rotiert. Die Teilungsspur 132 ist radial um den Drehmittelpunkt 134 des Teilungsträgers 130 angeordnet.

Die Positionsaufnehmer 100.1, 100.2, 100.3, 100.4 sind in gleichmäßigen Abständen über den Umfang des Teilungsträgers 130 angeordnet. Ihr Winkelabstand zueinander beträgt daher je 90°. Jeder der Positionsaufnehmer 100.1, 100.2, 100.3, 100.4 ist ausgestaltet zur Durchführung einer Positionsmessung und zur Bereitstellung und Ausgabe eines Positionswertes A, B, C, D. Eine Positionsmessung wird jeweils ausgelöst durch das Eintreffen eines Positionsanforderungsbefehls RA, RB, RC, RD und erfolgt durch Abtastung der Teilungsspur 132 und Verarbeitung der hieraus resultierenden Abtastsignale zu einem Positionswert. Für die vorliegende Erfindung ist es vorteilhaft, wenn die Positionsaufnehmer 100.1, 100.2, 100.3, 100.4 so initialisiert sind, dass sie bei einer idealen Anordnung den gleichen Positionswert (Winkelwert) messen.

Jeder der Positionsaufnehmer 100.1, 100.2, 100.3, 100.4 ist über eine Schnittstellenverbindung 115.1, 115.2, 115.3, 115.4 mit dem Positionsrechner 120 verbunden. Die Schnittstellenverbindungen 115.1, 115.2, 115.3, 115.4 umfassen, analog zu Figur 1, je eine Geräteschnittstelle 112.1, 112.2, 112.3, 112.4 seitens der Positionsaufnehmer 100.1, 100.2, 100.3, 100.4, die über einen Datenübertragungskanal 114.1, 114.2, 114.3, 114.4 mit einer korrespondierenden Rechnerschnittstelle 122.1, 122.2, 122.3, 122.4 seitens des Positionsrechners 120 verbunden ist. In Figur 4 sind somit unter dem Bezugszeichen 115.1 die Geräteschnittstelle 112.1, der Datenübertragungskanal 114.1 und die Rechnerschnittstelle 122.1 zusammengefasst, usw.

Die Schnittstellenverbindungen 115.1, 115.2, 115.3, 115.4 sind wiederum geeignet ausgestaltet zur Übertragung von Positionsanforderungsbefehlen RA, RB, RC, RD vom Positionsrechner 120 zu den Positionsaufnehmern 100.1, 100.2, 100.3, 100.4 und zur Übertragung von Positionswerten A, B, C, D von den Positionsaufnehmern 100.1, 100.2, 100.3, 100.4 zum Positionsrechner 120. Die Positionswerte A, B, C, D werden in Form von binär codierten Datenworten mit gleicher Wortbreite bitseriell übertragen. Die Übertragung der Positionswerte A, B, C, D beginnt mit dem niederwertigsten Bit ("least significant bit", LSB) und endet mit dem höchstwertigen Bit ("most significant bit", MSB). Sie erfolgt über die jeweiligen Schnittstellenverbindungen 115.1, 115.2, 115.3, 115.4 mit der gleichen Übertragungsrate.

Aus der EP 2 551 645 A2 ist bekannt, dass Abweichungen von der idealen Anordnung dazu führen können, dass die Positionsaufnehmer 100.1, 100.2, 100.3, 100.4 unterschiedliche Positionswerte messen und dass durch Mittelwertbildung ein korrigierter Positionswert bestimmbar ist, der wiederum der Position einer idealen Anordnung entspricht. Zur Bildung des Mittelwerts aus den von den Positionsaufnehmern 100.1, 100.2, 100.3, 100.4 eintreffenden Positionswerten ist im Positionsrechner 120 ein serielles Rechenwerk 125 vorgesehen.

Dem seriellen Rechenwerk 125 sind von den Positionsaufnehmern 100.1, 100.2, 100.3, 100.4 eintreffende Positionswerte A, B, C, D zugeführt. Das serielle Rechenwerk 125 ist ausgestaltet, die Positionswerte A, B, C, D seriell zum gemittelten Positionswert M zu verarbeiten und den gemittelten Positionswert M wiederum seriell an eine Systemschnittstelle 124 zur Ausgabe an das Steuergerät 50 weiterzuleiten. Auf diese Weise beginnen auch in diesem Ausführungsbeispiel sowohl die Berechnung des gemittelten Positionswerts M und auch dessen Ausgabe bereits zu einem Zeitpunkt, zu dem die Positionswerte A, B, C, D noch nicht vollständig empfangen wurden.

Der Positionsrechner 120 ist über die Systemschnittstelle 124 und den externen Datenübertragungskanal 51 mit der Steuerungsschnittstelle 52 des Steuergeräts 50 verbindbar. Die Systemschnittstelle 124 entspricht somit in ihrer Funktion der korrespondierenden Systemschnittstelle 24 aus Figur 1. Externe Positionsanforderungsbefehle XR werden auch hier unmittelbar an die Rechnerschnittstellen 122.1, 122.2, 122.3, 122.4 weitergeleitet.

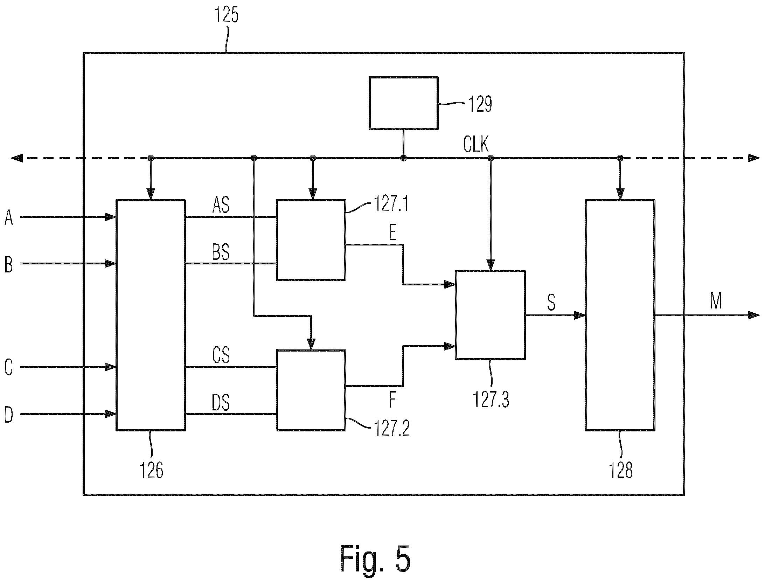

Figur 5 zeigt ein Ausführungsbeispiel eines seriellen Rechenwerks 125. Es umfasst eine Eingangsstufe 126, drei serielle Addierer 127.1, 127.2, 127.3 und eine Ausgangsstufe 128.

Die Eingangsstufe 126 ist geeignet ausgestaltet, um die seriell eintreffenden Positionswerte A, B, C, D zeitlich gleichzuschalten und die resultierenden synchronisierten Positionswerte AS, BS, CS, DS bitsynchron zu den Addierern 127.1, 127.2 auszugeben. Hierfür können wiederum first-in-first-out Speicherbausteine (FIFO) als Zwischenspeicher eingesetzt werden.

Die Addition der synchronisierten Positionswerte AS, BS, CS, DS erfolgt kaskadiert in zwei Stufen. In einer ersten Stufe werden jeweils zwei der Positionswerte in den Addierern 127.1, 127.2 addiert, im dargestellten Beispiel ein erster synchronisierter Positionswert AS und ein zweiter synchronisierter Positionswert BS im Addierer 127.1 zu einer ersten Teilsumme E und ein dritter synchronisierter Positionswert CS und ein vierter synchronisierter Positionswert DS im Addierer 127.2 zu einer zweiten Teilsumme F. Die Teilsummen E, F sind dem dritten Addierer 127.3 zugeführt und werden in dieser zweiten Stufe zum Summenwert S addiert. Die zur Bildung des gemittelten Positionswerts M notwendige Division durch vier erfolgt in der Ausgangsstufe 128 durch Nicht-Ausgabe der zwei niederwertigsten Bits des Summenwerts S.

Die mehrstufige, kaskadierte Addition ist besonders einfach zu realisieren, weil die benötigten Addierer 127.1, 127.2, 127.3 lediglich eine Rechenbreite von zwei Bit aufweisen müssen und daher sehr einfach aufgebaut sind. Deshalb wird diese Lösung als besonders vorteilhaft betrachtet. Alternativ können die Addierer 127.1, 127.2, 127.3 aber auch durch einen einzigen Addierer ersetzt werden, der geeignet ausgestaltet ist, die aktuellen Bits der eintreffenden synchronisierten Positionswerte AS, BS, CS, DS gleichzeitig zu addieren.

Weil der Wertebereich eines Winkelmessgeräts systembedingt begrenzt ist, kommt es nach dem Zurücklegen einer vollen Umdrehung zu einem Sprung im Verlauf der Positionswerte A, B, C, D. In anderen Worten ausgedrückt, weist das Winkelmessgerät einen periodisch sich wiederholenden Wertebereich auf. Das bedeutet, je nach Drehrichtung kehren die Positionswerte A, B, C, D von einem Maximalwert des Wertebereichs wieder zum Startwert "0" zurück, bzw. springen vom Startwert "0" zum Maximalwert. Zwischen dem Maximalwert und dem Startwert "0" liegt somit eine Sprungstelle im Werteverlauf. Im nicht-idealen Betriebsfall kann es deshalb vorkommen, dass eine Positionsmessung zu einem Zeitpunkt erfolgt, zu dem der gemessene Positionswert wenigstens eines der Positionsaufnehmer 100.1, 100.2, 100.3, 100.4 vor der Sprungstelle und der gemessene Positionswert wenigstens eines der verbleibenden Positionsaufnehmer 100.1, 100.2, 100.3, 100.4 hinter der Sprungstelle liegt. In einem solchen Fall führt die oben beschriebene serielle Mittelwertbildung zu einem unrichtigen Ergebnis.

Um hier dennoch zu einem richtigen Ergebnis zu gelangen, ist die Eingangsstufe 126 geeignet ausgestaltet, die ihr zugeführten Positionswerte A, B, C, D bezüglich eines Sprunges im Werteverlauf zu überwachen und im Fall, dass wenigstens einer der Positionswerte A, B, C, D vor der Sprungstelle und wenigstens einer der verbleibenden Positionswerte A, B, C, D hinter der Sprungstelle liegt, eine virtuelle Wertebereichserweiterung durchzuführen. In der Praxis erfolgt dies durch Erweiterung des Wertebereichs der Positionswerte A, B, C, D um eine binäre Stelle, die bei Positionswerten, die vor der Sprungstelle (in der Nähe des Maximalwerts des Wertebereichs) liegen, mit einer logischen "0" und bei Positionswerten, die hinter der Sprungstelle (in der Nähe des Startwerts "0") liegen, mit einer logischen "1" besetzt wird. Dadurch erhöht sich die Wortbreite der synchronisierten Positionswerte AS, BS, bzw. CS, DS, die an die Addierer 127.1, 127.2 der ersten Stufe ausgegeben werden, um eine binäre Stelle.

Die aus der virtuellen Wertebereichserweiterung resultierenden zusätzlichen binären Stellen des Summenwertes S werden in der Ausgangsstufe 128 verworfen. Dies erfolgt ganz einfach dadurch, dass nach erfolgter Division durch vier lediglich n binäre Stellen des Summenwertes S (entsprechend der Wortbreite der Positionswerte A, B, C, D) an die Systemschnittstelle 124 als gemittelter Positionswert M ausgegeben werden.

Das Prinzip der virtuellen Wertebereichserweiterung ist nicht nur bei Winkelmessgeräten anwendbar, sondern bei allen Positionsmesssystemen, bei denen periodisch sich wiederholende Wertebereiche auftreten und die somit eine Sprungstelle aufweisen. Dies trifft beispielsweise auf Längenmessgeräte mit Maßstäben, bei denen sich die Codierung periodisch wiederholt, zu.

Auch das serielle Rechenwerk 125 ist mit Vorteil als digitale Zustandsmaschine ausgeführt. Ein hierfür notwendiges Taktsignal CLK kann dem seriellen Rechenwerk 125 von außen zugeführt sein. In einer bevorzugten Ausführungsform umfasst das serielle Rechenwerk 125 einen Taktgenerator 29, der das Taktsignal CLK der Eingangsstufe 126, den Addierern 127.1, 127.2, 127.3 und der Ausgangsstufe 128 zur Verfügung stellt. Darüber hinaus können auch die diversen Schnittstellen (Rechnerschnittstelle 122.1, 122.2, 122.3, 122.4, Systemschnittstelle 124) mit dem Taktsignal CLK versorgt sein, so dass alle Verfahrensschritte in den verschiedenen Komponenten synchron zum Taktsignal CLK, oder einem vom Taktsignal CLK abgeleiteten Taktsignal ablaufen.

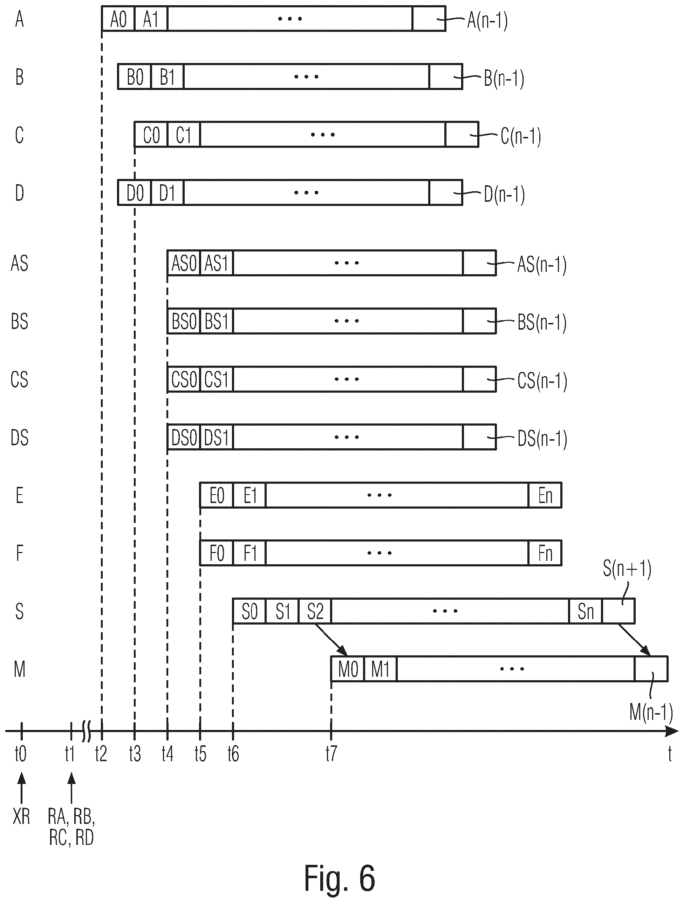

Figur 6 zeigt ein Signaldiagramm zur Verdeutlichung der Abläufe im seriellen Rechenwerk 125 nach Figur 5, wobei angenommen wird, dass kein Sprung im Werteverlauf auftritt, bzw. der Fall, dass wenigstens einer der Positionswerte vor und wenigstens einer der Positionswerte hinter einer Sprungstelle liegt, nicht auftreten kann.

Zu einem Zeitpunkt t0 trifft ein externer Positionsanforderungsbefehl XR bei der Ablaufsteuerung 129 ein, die daraufhin zu einem Zeitpunkt t1 Positionsanforderungsbefehle RA, RB, RC, RD über die Schnittstellenverbindungen 115.1, 115.2, 115.3, 115.4 an die Positionsaufnehmer 100.1, 100.2, 100.3, 100.4 ausgibt.

Ab einem Zeitpunkt t2 trifft das niederwertigste Bit A0 des ersten Positionswerts A bei der Eingangsstufe 126 des seriellen Rechenwerks 125 ein. Diese verzögert die Ausgabe an die Addierer 127.1, 127.2 der ersten Stufe, bis zu einem Zeitpunkt t3 das niederwertigste Bit C0 des dritten und in diesem Beispiel letzten Positionswerts C eintrifft.

Daraufhin startet zu einem Zeitpunkt t4 die synchrone Ausgabe der synchronisierten Positionswerte AS, BS an den Addierer 127.1 und der synchronisierten Positionswerte CS, DS an den Addierer 127.2. Die Addierer 127.1, 127.2 führen eine bitserielle Addition durch und geben die Teilsummen E, bzw. F ab einem Zeitpunkt t5 bitseriell an den Addierer 127.3 der zweiten Stufe aus.

Der Addierer 127.3 führt wiederum eine bitserielle Addition der Teilsummen E, F aus und gibt Ergebnis als Summenwert S ab dem Zeitpunkt t6 an die Ausgangsstufe 128 aus.

Die Ausgangsstufe 128 berechnet nun den Mittelwert M der Positionswerte A, B, C, D durch Nicht-Ausgabe der zwei niederwertigsten Bits S0 und S1, entsprechend einer Division durch vier. Somit startet die Ausgabe des gemittelten Positionswertes M mit Bit S2 des Summenwerts S, das hiermit zum niederwertigsten Bit M0 des gemittelten Positionswerts M wird. Die Ausgabe endet mit der Ausgabe des höchstwertigen Bits S(n+1) des Summenwerts S als höchstwertiges Bit M(n-1) des gemittelten Positionswerts M, der damit wieder eine Wortbreite von n Bits aufweist.

Die Ausgabe des gemittelten Positionswerts M über die Systemschnittstelle 124 erfolgt auch in diesem Ausführungsbeispiel mit Vorteil innerhalb eines Datenpakets. Um Teile des Datenpakets, die dem gemittelten Positionswert M vorauseilen, möglichst früh ausgeben zu können, ist es vorteilhaft, wenn das serielle Rechenwerk 125, insbesondere die Eingangsstufe 126, zu einem geeigneten Zeitpunkt, beispielsweise zum Zeitpunkt t3, wenn alle Positionswerte A, B, C, D bei der Eingangsstufe 126 angekommen sind, ein Signal an die Systemschnittstelle 124 sendet und damit das Eintreffen des gemittelten Positionswerts M ankündigt. Auf diese Weise kann gegebenenfalls eine Startsequenz (z.B. Startbit) des Datenpakets bereits ausgegeben werden, bevor das niederwertigste Bit M0 des gemittelten Positionswerts M eintrifft. Um einen nahtlosen Übergang von der Startsequenz zum gemittelten Positionswert M zu erreichen, ist es vorteilhaft, wenn, wie oben bereits erwähnt, auch die Systemschnittstelle 124 synchron zum Zeitraster des Taktsignals CLK arbeitet.

Nach Ausgabe des gemittelten Positionswerts M kann die Systemschnittstelle 124 ggf. noch weitere Informationen übertragen und das Datenpaket schließlich mit einer Endsequenz abschließen.

Es sei an dieser Stelle auch darauf hingewiesen, dass auch die Positionswerte A, B, C, D in der Praxis meist als Teil eines Datenpakets bei den Rechnerschnittstellen 122.1, 122.2, 122.3, 122.4 eintreffen. Im Rahmen der vorliegenden Erfindung wird nur auf die Verarbeitung der Positionswerte A, B, C, D eingegangen, die Behandlung der übrigen Teile der Datenpakete, wie Startsequenz, Zusatzinformationen und Endsequenz wird nicht weiter ausgeführt.

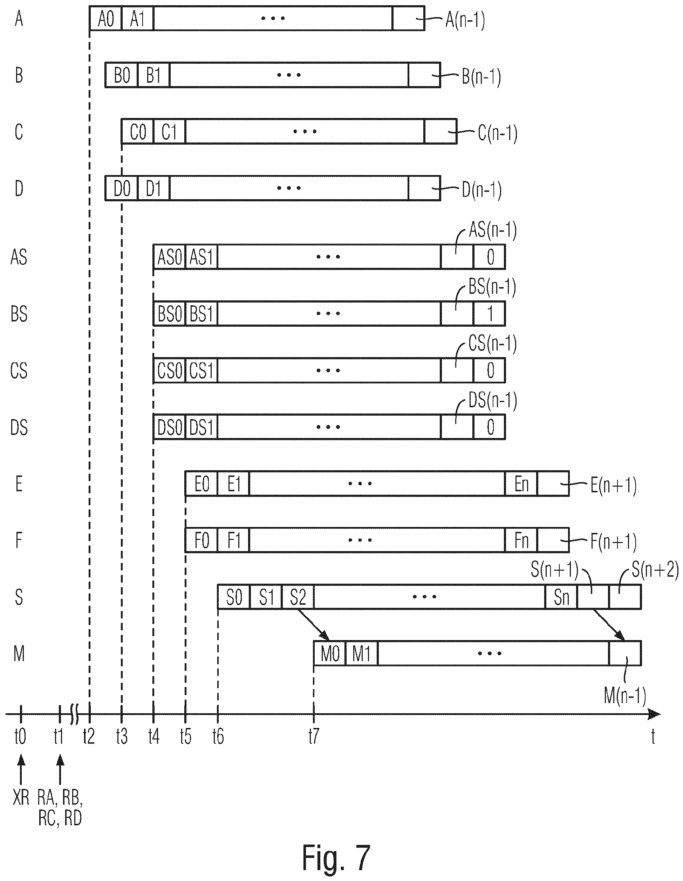

Figur 7 zeigt ein Signaldiagramm zur Verdeutlichung der Abläufe im seriellen Rechenwerk 125 nach Figur 5 im Falle einer Wertebereichsüberschreitung, bei der wenigstens einer der Positionswerte A, B, C, D vor der Sprungstelle und wenigstens einer der verbleibenden Positionswerte A, B, C, D hinter der Sprungstelle liegt. Im vorliegenden Beispiel liegt der Positionswert B vor hinter der Sprungstelle (in der Nähe des Startwerts des Wertebereichs) und die übrigen Positionswerten A, C, D liegen vor der Sprungstelle (in der Nähe des Maximalwerts des Wertebereichs).

Es sei explizit darauf hingewiesen, dass der Ausdruck "in der Nähe des Startwerts" den Startwert "0" mit einschließt und der Ausdruck "in der Nähe des Maximalwerts" den Maximalwert des Wertebereichs mit einschließt.

Stellt nun die Eingangsstufe 126 die Wertebereichsüberschreitung fest, dann ergänzt sie die synchronisierten Positionswerte AS, BS, CS, DS nach Ausgabe der höchstwertigsten Bits AS(n-1), BS(n-1), CS(n-1), DS(n-1) um eine binäre Stelle und belegt diese beim synchronisierten Positionswert BS, mit einer logischen "1" und bei den verbleibenden synchronisierten Positionswerten AS, CS, DS mit einer logischen "0".

Dies hat die Wirkung einer virtuellen Wertebereichserweiterung. Sie führt dazu, dass sowohl die Teilsummen E, F eine weitere binäre Stelle E(n+1), F(n+1) aufweisen, als auch der Summenwert S (zusätzliches Bit S(n+2)).

Bei der Bildung und Ausgabe des Mittelwerts M bleiben diese zusätzlichen binären Stellen unberücksichtigt, es wird auch im Fall einer Wertebereichsüberschreitung und der daraus resultierenden virtuellen Wertebereichserweiterung nur ein Datenwort mit n Bit Breite ausgegeben, dessen höchstwertiges Bit das Bit S(n+1) des Summenwerts S ist.

Das anhand der Figuren 4 bis 7 beschriebene Ausführungsbeispiel ist geeignet für Positionsmesssysteme mit einer Anzahl von 2^x Positionsaufnehmern, wobei x eine positive ganze Zahl ist, und bei denen Wertebereichsüberschreitungen auftreten, wie oben beschrieben. Wird die Schaltung für die Addition im seriellen Rechenwerk, wie in Figur 5 gezeigt, mehrstufig (kaskadiert) ausgeführt, so sind x Stufen vorzusehen. Sie kann in diesem Fall ausschließlich Addierer mit zwei Bit Rechenbreite umfassen.

Auch bei diesem Ausführungsbeispiel gewährleistet, dass die abschließende Divisionsoperation durch die Nicht-Ausgabe einer Anzahl von x niederwertigsten Bits erfolgen kann. Dies wiederum ermöglicht den Beginn der bitseriellen Ausgabe des gemittelten Positionswerts M mit dem niederwertigsten Bit M0 (LSB) noch bevor die vollständige Addition der synchronisierten Positionswerte AS, BS, CS, DS abgeschlossen ist.

Die vorliegende Erfindung ist nicht auf die beschriebenen Ausführungsbeispiele beschränkt, sondern kann von einem Fachmann im Rahmen der Ansprüche alternativ ausgeführt werden.

## Patentansprüche

1. Positionsmesssystem umfassend eine Anzahl von 2^x Positionsaufnehmern (10.1, 10.2, 100.1, 100.2, 100.3, 100.4), wobei x eine positive ganze Zahl ist, und einen Positionsrechner (20, 120), wobei der Positionsrechner (20, 120) eine Systemschnittstelle (24, 124), ein serielles Rechenwerk (25, 125) und je Positionsaufnehmer (10.1, 10.2, 100.1, 100.2, 100.3, 100.4) eine Rechnerschnittstelle (22.1, 22.2, 122.1, 122.2, 122.3, 122.4) umfasst, wobei
• die Rechnerschnittstellen (22.1, 22.2, 122.1, 122.2, 122.3, 122.4) über Datenübertragungskanäle (14.1, 14.2, 114.1, 114.2, 114.3, 114.4) mit korrespondierenden Geräteschnittstellen (12.1, 12.2, 112.1, 112.2, 112.3, 112.4) der Positionsaufnehmer (10.1, 10.2, 100.1, 100.2, 100.3, 100.4) zum Zwecke einer Datenübertragung verbunden sind,
• die Systemschnittstelle (24, 124) über einen externen Datenübertragungskanal (51) mit einem Steuergerät (50) verbindbar ist und ausgestaltet ist, externe Positionsanforderungsbefehle (XR), die vom Steuergerät (50) eintreffen an die Rechnerschnittstellen (22.1, 22.2, 122.1, 122.2, 122.3, 122.4) weiterzuleiten und gemittelte Positionswerte (M) seriell an das Steuergerät (50) auszugeben,
• die Rechnerschnittstellen (22.1, 22.2, 122.1, 122.2, 122.3, 122.4) ausgestaltet sind, als Folge eines Eintreffens eines externen Positionsanforderungsbefehls (XR) wiederum Positionsanforderungsbefehle (RA, RB, RC, RD) an die Positionsaufnehmer (10.1, 10.2, 100.1, 100.2, 100.3, 100.4) zu senden,
• die Positionsaufnehmer (10.1, 10.2, 100.1, 100.2, 100.3, 100.4) ausgestaltet sind, als Folge eines Eintreffens eines Positionsanforderungsbefehls (RA, RB, RC, RD) einen Positionswert (A, B, C, D) mit einer Wortbreite von n Bit zu generieren und seriell über die Geräteschnittstelle (12.1, 12.2, 112.1, 112.2, 112.3, 112.4) an den Positionsrechner (20, 120) auszugeben,
• die Rechnerschnittstellen (22.1, 22.2, 122.1, 122.2, 122.3, 122.4) weiter ausgestaltet sind, den Positionswert (A, B, C, D) zu empfangen und seriell an das serielle Rechenwerk (25, 125) auszugeben und
• das serielle Rechenwerk (25, 125) ausgestaltet ist, aus den Positionswerten (A, B, C, D) seriell den gemittelten Positionswert (M) zu berechnen und seriell an die Systemschnittstelle (24, 124) zur Ausgabe an das Steuergerät (50) auszugeben.

2. Positionsmesssystem nach Anspruch 1, wobei das serielle Rechenwerk (25, 125) eine Eingangsstufe (26, 126), wenigstens einen Addierer (27, 127.1, 127.2, 127.3) und eine Ausgangsstufe (28, 128) umfasst, wobei
• die Eingangsstufe (26, 126) geeignet ausgestaltet ist, von den Rechnerschnittstellen (22.1, 22.2, 122.1, 122.2, 122.3, 122.4) eintreffende Positionswerte (A, B, C, D) zeitlich gleichzuschalten und als synchronisierte Positionswerte (AS, BS, CS, DS) seriell an den wenigstens einen Addierer (27, 127.1, 127.2, 127.3) auszugeben,
• der wenigstens eine Addierer (27, 127.1, 127.2, 127.3) geeignet ausgestaltet ist, die synchronisierten Positionswerte (AS, BS, CS, DS) bitseriell zu addieren und einen Summenwert (S) seriell an die Ausgangsstufe (28, 128) auszugeben und
• die Ausgangsstufe (28, 128) geeignet ausgestaltet ist, den Summenwert (S) durch die Anzahl der Positionswerte zu teilen und das Ergebnis als gemittelten Positionswert (M) mit einer Wortbreite von n Bit seriell an die Systemschnittstelle (24, 124) auszugeben.

3. Positionsmesssystem nach einem der vorhergehenden Ansprüche, wobei die Positionswerte (A, B, C, D) des Positionsmesssystems eine Wortbreite von n Bit und einen periodisch sich wiederholenden Wertebereich von 0 bis 2^(n-1) aufweisen und die Eingangsstufe (26, 126) ausgestaltet ist, im Fall, dass wenigstens einer der ihr zugeführten Positionswerte (A, B, C, D) vor einer Sprungstelle im Werteverlauf liegt, und wenigstens einer der verbleibenden Positionswerte (A, B, C, D) hinter einer Sprungstelle im Werteverlauf liegt, eine virtuelle Wertebereichserweiterung um eine binäre Stelle durchzuführen und diese bei Positionswerten (A, B, C, D), die vor der Sprungstelle im Werteverlauf liegen, mit einer logischen "0" zu belegen und bei Positionswerten (A, B, C, D), die hinter der Sprungstelle des Werteverlaufs liegen, mit einer logischen "1" zu belegen.

4. Positionsmesssystem nach Anspruch 2 oder 3, wobei die Schaltung für die bitserielle Addition im seriellen Rechenwerk (25, 125) x Stufen aufweist und ausschließlich Addierer (27, 127.1, 127.2, 127.3) mit zwei Bit Rechenbreite umfasst.

5. Positionsmesssystem einem der Ansprüche 2 bis 4, wobei das serielle Rechenwerk (25, 125) weiter einen Taktgenerator (29, 129) umfasst, der die Eingangsstufe (26, 126) und/oder den wenigstens einen Addierer (27, 127.1, 127.2, 127.3) und/oder die Ausgangsstufe (28, 128) mit einem Taktsignal (CLK) versorgt.

6. Verfahren zur Mittelwertbildung von Positionswerten in einem Positionsmesssystem umfassend eine Anzahl von 2^x Positionsaufnehmern (10.1, 10.2, 100.1, 100.2, 100.3, 100.4), wobei x eine positive ganze Zahl ist, und einen Positionsrechner (20, 120), wobei der Positionsrechner (20, 120) eine Systemschnittstelle (24, 124), ein serielles Rechenwerk (25, 125) und je Positionsaufnehmer (10.1, 10.2, 100.1, 100.2, 100.3, 100.4) eine Rechnerschnittstelle (22.1, 22.2, 122.1, 122.2, 122.3, 122.4) umfasst, wobei
• die Rechnerschnittstellen (22.1, 22.2, 122.1, 122.2, 122.3, 122.4) über Datenübertragungskanäle (14.1, 14.2, 114.1, 114.2, 114.3, 114.4) mit korrespondierenden Geräteschnittstellen (12.1, 12.2, 112.1, 112.2, 112.3, 112.4) der Positionsaufnehmer (10.1, 10.2, 100.1, 100.2, 100.3, 100.4) zum Zwecke einer Datenübertragung verbunden sind,
• die Systemschnittstelle (24, 124) über einen externen Datenübertragungskanal (51) mit einem Steuergerät (50) verbunden ist und von der Systemschnittstelle (24, 124) externe Positionsanforderungsbefehle (XR), die vom Steuergerät (50) eintreffen, an die Rechnerschnittstellen (22.1, 22.2, 122.1, 122.2, 122.3, 122.4) weitergeleitet werden und gemittelte Positionswerte (M) seriell an das Steuergerät (50) ausgegeben werden,
• von den Rechnerschnittstellen (22.1, 22.2, 122.1, 122.2, 122.3, 122.4) als Folge eines Eintreffens eines externen Positionsanforderungsbefehls (XR) wiederum Positionsanforderungsbefehle (RA, RB, RC, RD) an die Positionsaufnehmer (10.1, 10.2, 100.1, 100.2, 100.3, 100.4) gesendet werden,
• in den Positionsaufnehmern (10.1, 10.2, 100.1, 100.2, 100.3, 100.4) als Folge eines Eintreffens eines Positionsanforderungsbefehls (RA, RB, RC, RD) jeweils ein Positionswert (A, B, C, D) mit einer Wortbreite von n Bit generiert und seriell über die Geräteschnittstelle (12.1, 12.2, 112.1, 112.2, 112.3, 112.4) an den Positionsrechner (20, 120) ausgegeben wird,
• von den Rechnerschnittstellen (22.1, 22.2, 122.1, 122.2, 122.3, 122.4) der jeweilige Positionswert (A, B, C, D) empfangen und seriell an das serielle Rechenwerk (25, 125) ausgegeben wird und
• im seriellen Rechenwerk (25, 125) aus den Positionswerten (A, B, C, D) seriell der gemittelte Positionswert (M) berechnet und seriell an die Systemschnittstelle (24, 124) zur Ausgabe an das Steuergerät (50) ausgegeben wird.

7. Verfahren nach Anspruch 6, wobei das serielle Rechenwerk (25, 125) eine Eingangsstufe (26, 126), wenigstens einen Addierer (27, 127.1, 127.2, 127.3) und eine Ausgangsstufe (28, 128) umfasst, wobei
• von der Eingangsstufe (26, 126) von den Rechnerschnittstellen (22.1, 22.2, 122.1, 122.2, 122.3, 122.4) eintreffende Positionswerte (A, B, C, D) zeitlich gleichgeschaltet und als synchronisierte Positionswerte (AS, BS, CS, DS) seriell an den wenigstens einen Addierer (27, 127.1, 127.2, 127.3) ausgegeben werden,
• vom wenigstens einen Addierer (27, 127.1, 127.2, 127.3) die synchronisierten Positionswerte (AS, BS, CS, DS) bitseriell addiert werden und ein Summenwert (S) seriell an die Ausgangsstufe (28, 128) ausgegeben wird und
• von der Ausgangsstufe (28, 128) der Summenwert (S) durch die Anzahl der Positionswerte geteilt und das Ergebnis als gemittelter Positionswert (M) mit einer Wortbreite von n Bit seriell an die Systemschnittstelle (24, 124) ausgegeben wird.

8. Verfahren nach Anspruch 7, wobei die Positionswerte (A, B, C, D) des Positionsmesssystems eine Wortbreite von n Bit und einen periodisch sich wiederholenden Wertebereich von 0 bis 2^(n-1) aufweisen und von der Eingangsstufe (26, 126) im Fall, dass wenigstens einer der ihr zugeführten Positionswerte (A, B, C, D) vor einer Sprungstelle im Werteverlauf liegt, und wenigstens einer der verbleibenden Positionswerte (A, B, C, D) hinter einer Sprungstelle im Werteverlauf liegt, eine virtuelle Wertebereichserweiterung um eine binäre Stelle durchgeführt wird und diese bei Positionswerten (A, B, C, D), die vor der Sprungstelle im Werteverlauf liegen, mit einer logischen "0" belegt wird und bei Positionswerten (A, B, C, D), die hinter der Sprungstelle des Werteverlaufs liegen, mit einer logischen "1" belegt wird.

9. Verfahren nach einem der Ansprüche 7 oder 8, wobei das serielle Rechenwerk (25, 125) weiter einen Taktgenerator (29, 129) umfasst, von dem die Eingangsstufe (26, 126) und/oder der wenigstens eine Addierer (27, 127.1, 127.2, 127.3) und/oder die Ausgangsstufe (28, 128) mit einem Taktsignal (CLK) versorgt werden.

## Claims

1. Position measurement system comprising a number of 2^χ position sensors (10.1, 10.2, 100.1, 100.2, 100.3, 100.4), where x is a positive integer, and a position computer (20, 120), wherein the position computer (20, 120) comprises a system interface (24, 124), a serial arithmetic unit (25, 125) and a computer interface (22.1, 22.2, 122.1, 122.2, 122.3, 122.4) for each position sensor (10.1, 10.2, 100.1, 100.2, 100.3, 100.4), wherein
• the computer interfaces (22.1, 22.2, 122.1, 122.2, 122.3, 122.4) are connected, via data transmission channels (14.1, 14.2, 114.1, 114.2, 114.3, 114.4), to corresponding device interfaces (12.1, 12.2, 112.1, 112.2, 112.3, 112.4) of the position sensors (10.1, 10.2, 100.1, 100.2, 100.3, 100.4) for the purpose of transmitting data,
• the system interface (24, 124) can be connected to a control device (50) via an external data transmission channel (51) and is configured to forward external position request commands (XR), which arrive from the control device (50), to the computer interfaces (22.1, 22.2, 122.1, 122.2, 122.3, 122.4) and to serially output averaged position values (M) to the control device (50),
• the computer interfaces (22.1, 22.2, 122.1, 122.2, 122.3, 122.4) are configured, as a result of an external position request command (XR) arriving, to in turn send position request commands (RA, RB, RC, RD) to the position sensors (10.1, 10.2, 100.1, 100.2, 100.3, 100.4),
• the position sensors (10.1, 10.2, 100.1, 100.2, 100.3, 100.4) are configured, as a result of a position request command (RA, RB, RC, RD) arriving, to generate a position value (A, B, C, D) with a word length of n bits and to serially output it to the position computer (20, 120) via the device interface (12.1, 12.2, 112.1, 112.2, 112.3, 112.4),
• the computer interfaces (22.1, 22.2, 122.1, 122.2, 122.3, 122.4) are further configured to receive the position value (A, B, C, D) and to serially output it to the serial arithmetic unit (25, 125), and
• the serial arithmetic unit (25, 125) is configured to serially calculate the averaged position value (M) from the position values (A, B, C, D) and to serially output it to the system interface (24, 124) for output to the control device (50).

2. Position measurement system according to Claim 1, wherein the serial arithmetic unit (25, 125) comprises an input stage (26, 126), at least one adder (27, 127.1, 127.2, 127.3) and an output stage (28, 128), wherein
• the input stage (26, 126) is suitably configured to temporally synchronize position values (A, B, C, D) arriving from the computer interfaces (22.1, 22.2, 122.1, 122.2, 122.3, 122.4) and to serially output them as synchronized position values (AS, BS, CS, DS) to the at least one adder (27, 127.1, 127.2, 127.3),
• the at least one adder (27, 127.1, 127.2, 127.3) is suitably configured to add the synchronized position values (AS, BS, CS, DS) bit-serially and to serially output a sum value (S) to the output stage (28, 128), and
• the output stage (28, 128) is suitably configured to divide the sum value (S) by the number of position values and to serially output the result as an averaged position value (M) with a word length of n bits to the system interface (24, 124).

3. Position measurement system according to one of the preceding claims, wherein the position values (A, B, C, D) of the position measurement system have a word length of n bits and a periodically repeating value range of 0 to 2^(n-1), and the input stage (26, 126) is configured, in the event of at least one of the position values (A, B, C, D) supplied to it lying in front of a discontinuity in the value curve and at least one of the remaining position values (A, B, C, D) lying behind a discontinuity in the value curve, to carry out a virtual value range extension by a binary digit and to assign a logic "0" to this in the case of position values (A, B, C, D) lying in front of the discontinuity in the value curve and to assign a logic "1" to this in the case of position values (A, B, C, D) lying behind the discontinuity in the value curve.

4. Position measurement system according to Claim 2 or 3, wherein the circuit for the bit-serial addition in the serial arithmetic unit (25, 125) has x stages and comprises exclusively adders (27, 127.1, 127.2, 127.3) with a computing width of two bits.

5. Position measurement system according to one of Claims 2 to 4, wherein the serial arithmetic unit (25, 125) further comprises a clock generator (29, 129) which supplies the input stage (26, 126) and/or the at least one adder (27, 127.1, 127.2, 127.3) and/or the output stage (28, 128) with a clock signal (CLK).

6. Method for averaging position values in a position measurement system comprising a number of 2^χ position sensors (10.1, 10.2, 100.1, 100.2, 100.3, 100.4), where x is a positive integer, and a position computer (20, 120), wherein the position computer (20, 120) comprises a system interface (24, 124), a serial arithmetic unit (25, 125) and a computer interface (22.1, 22.2, 122.1, 122.2, 122.3, 122.4) for each position sensor (10.1, 10.2, 100.1, 100.2, 100.3, 100.4), wherein
• the computer interfaces (22.1, 22.2, 122.1, 122.2, 122.3, 122.4) are connected, via data transmission channels (14.1, 14.2, 114.1, 114.2, 114.3, 114.4), to corresponding device interfaces (12.1, 12.2, 112.1, 112.2, 112.3, 112.4) of the position sensors (10.1, 10.2, 100.1, 100.2, 100.3, 100.4) for the purpose of transmitting data,
• the system interface (24, 124) is connected to a control device (50) via an external data transmission channel (51), and the system interface (24, 124) forwards external position request commands (XR), which arrive from the control device (50), to the computer interfaces (22.1, 22.2, 122.1, 122.2, 122.3, 122.4) and serially outputs averaged position values (M) to the control device (50),
• as a result of an external position request command (XR) arriving, the computer interfaces (22.1, 22.2, 122.1, 122.2, 122.3, 122.4) in turn send position request commands (RA, RB, RC, RD), to the position sensors (10.1, 10.2, 100.1, 100.2, 100.3, 100.4),
• as a result of a position request command (RA, RB, RC, RD) arriving, a position value (A, B, C, D) with a word length of n bits is generated in each case in the position sensors (10.1, 10.2, 100.1, 100.2, 100.3, 100.4) and is serially output to the position computer (20, 120) via the device interface (12.1, 12.2, 112.1, 112.2, 112.3, 112.4),
• the computer interfaces (22.1, 22.2, 122.1, 122.2, 122.3, 122.4)receive the respective position value (A, B, C, D) and serially output it to the serial arithmetic unit (25, 125), and
• the averaged position value (M) is serially calculated from the position values (A, B, C, D) in the serial arithmetic unit (25, 125) and is serially output to the system interface (24, 124) for output to the control device (50).

7. Method according to Claim 6, wherein the serial arithmetic unit (25, 125) comprises an input stage (26, 126), at least one adder (27, 127.1, 127.2, 127.3) and an output stage (28, 128), wherein
• the input stage (26, 126) temporally synchronizes position values (A, B, C, D) arriving from the computer interfaces (22.1, 22.2, 122.1, 122.2, 122.3, 122.4) and serially outputs them as synchronized position values (AS, BS, CS, DS) to the at least one adder (27, 127.1, 127.2, 127.3),
• the at least one adder (27, 127.1, 127.2, 127.3) bit-serially adds the synchronized position values (AS, BS, CS, DS) and serially outputs a sum value (S) to the output stage (28, 128), and
• the output stage (28, 128) divides the sum value (S) by the number of position values and serially outputs the result as an averaged position value (M) with a word length of n bits to the system interface (24, 124).

8. Method according to Claim 7, wherein the position values (A, B, C, D) of the position measurement system have a word length of n bits and a periodically repeating value range of 0 to 2^(n-1), and the input stage (26, 126), in the event of at least one of the position values (A, B, C, D) supplied to it lying in front of a discontinuity in the value curve and at least one of the remaining position values (A, B, C, D) lying behind a discontinuity in the value curve, carries out a virtual value range extension by a binary digit and assigns a logic "0" to this in the case of position values (A, B, C, D) lying in front of the discontinuity in the value curve and assigns a logic "1" to this in the case of position values (A, B, C, D) lying behind the discontinuity in the value curve.

9. Method according to either of Claims 7 and 8, wherein the serial arithmetic unit (25, 125) further comprises a clock generator (29, 129) which supplies the input stage (26, 126) and/or the at least one adder (27, 127.1, 127.2, 127.3) and/or the output stage (28, 128) with a clock signal (CLK).

## Revendications

1. Système de mesure de position, comprenant un nombre de 2^χ capteurs de position (10.1, 10.2, 100.1, 100.2, 100.3, 100.4), x étant un nombre entier positif, et un calculateur de position (20, 120), dans lequel le calculateur de position (20, 120) comprend une interface de système (24, 124), une unité arithmétique série (25, 125), et pour chaque capteur de position (10.1, 10.2, 100.1, 100.2, 100.3, 100.4), une interface de calculateur (22.1, 22.2, 122.1, 122.2, 122.3, 122.4), dans lequel
• les interfaces de calculateur (22.1, 22.2, 122.1, 122.2, 122.3, 122.4) sont reliées par l'intermédiaire de canaux de transmission de données (14.1, 14.2, 114.1, 114.2, 114.3, 114.4) à des interfaces d'appareil (12.1, 12.2, 112.1, 112.2, 112.3, 112.4) correspondantes des capteurs de position (10.1, 10.2, 100.1, 100.2, 100.3, 100.4) en vue d'une transmission de données,
• l'interface de système (24, 124) peut être reliée par l'intermédiaire d'un canal de transmission de données externe (51) à un appareil de commande (50) et est configurée pour retransmettre aux interfaces de calculateur (22.1, 22.2, 122.1, 122.2, 122.3, 122.4) des commandes de demande de position externes (XR) provenant de l'appareil de commande (50) et pour sortir en série des valeurs de position moyennées (M) à destination de l'appareil de commande (50),
• suite à l'arrivée d'une commande de demande de position externe (XR), les interfaces de calculateur (22.1, 22.2, 122.1, 122.2, 122.3, 122.4) sont configurées pour envoyer à leur tour des commandes de demande de position (RA, RB, RC, RD) aux capteurs de position (10.1, 10.2, 100.1, 100.2, 100.3, 100.4),
• suite à l'arrivée d'une commande de demande de position (RA, RB, RC, RD), les capteurs de position (10.1, 10.2, 100.1, 100.2, 100.3, 100.4) sont configurés pour générer une valeur de position (A, B, C, D) d'une largeur de mot de n bits et pour les sortir en série par l'intermédiaire de l'interface d'appareil (12.1, 12.2, 112.1, 112.2, 112.3, 112.4) à destination du calculateur de position (20, 120),
• les interfaces de calculateur (22.1, 22.2, 122.1, 122.2, 122.3, 122.4) sont en outre configurées pour recevoir la valeur de position (A, B, C, D) et pour la sortir en série à destination de l'unité arithmétique série (25, 125), et
• l'unité arithmétique série (25, 125) est configurée pour calculer à partir des valeurs de position (A, B, C, D) en série la valeur de position moyennée (M) et pour la sortir en série à l'interface de système (24, 124) pour une sortie à destination de l'appareil de commande (50).

2. Système de mesure de position selon la revendication 1, dans lequel l'unité arithmétique série (25, 125) comprend un étage d'entrée (26, 126), au moins un additionneur (27, 127.1, 127.2, 127.3) et un étage de sortie (28, 128), dans lequel
• l'étage d'entrée (26, 126) est configuré de manière appropriée pour commuter simultanément des valeurs de position (A, B, C, D) provenant des interfaces de calculateur (22.1, 22.2, 122.1, 122.2, 122.3, 122.4) et pour les sortir en série sous forme de valeurs de position synchronisées (AS, BS, CS, DS) à destination dudit au moins un additionneur (27, 127.1, 127.2, 127.3),
• ledit au moins un additionneur (27, 127.1, 127.2, 127.3) est configuré de manière appropriée pour additionner en série par bit les valeurs de position synchronisées (AS, BS, CS, DS) et pour sortir en série une valeur cumulée (S) à destination de l'étage de sortie (28, 128), et
• l'étage de sortie (28, 128) est configuré de manière appropriée pour diviser la valeur cumulée (S) par le nombre des valeurs de position et pour sortir en série le résultat sous la forme d'une valeur de position moyennée (M) d'une largeur de mot de n bits à destination de l'interface de système (24, 124).

3. Système de mesure de position selon l'une quelconque des revendications précédentes, dans lequel les valeurs de position (A, B, C, D) du système de mesure de position présentent une largeur de mot de n bits et une plage de valeurs récurrente périodiquement de 0 à 2^(n-1), et l'étage d'entrée (26, 126) est configuré, au cas où au moins l'une des valeurs de position (A, B, C, D) amenées à celle-ci se trouverait avant un point de discontinuité dans la courbe de valeurs et au moins l'une des valeurs de position (A, B, C, D) restantes se trouverait après un point de discontinuité dans la courbe de valeurs, pour effectuer une extension de plage de valeurs virtuelle autour d'un point binaire, et pour la peupler avec un « 0 » logique pour des valeurs de position (A, B, C, D) qui se trouvent avant le point de discontinuité dans la courbe de valeurs, et pour la peupler avec un « 1 » logique pour des valeurs de position (A, B, C, D) qui se trouvent après le point de discontinuité de la courbe de valeurs.

4. Système de mesure de position selon la revendication 2 ou 3, dans lequel le circuit pour l'addition en série par bit présente x étages dans l'unité arithmétique série (25, 125) et ne comprend que des additionneurs (27, 127.1, 127.2, 127.3) ayant une largeur de calcul de deux bits.

5. Système de mesure de position selon l'une quelconque des revendications 2 à 4, dans lequel l'unité arithmétique série (25, 125) comprend en outre un générateur d'horloge (29, 129) qui alimente l'étage d'entrée (26, 126) et/ou ledit au moins additionneur (27, 127.1, 127.2, 127.3) et/ou l'étage de sortie (28, 128) avec un signal d'horloge (CLK).

6. Procédé de calcul de moyenne de valeurs de position dans un système de mesure de position, comprenant un nombre de 2^χ capteurs de position (10.1, 10.2, 100.1, 100.2, 100.3, 100.4), x étant un nombre entier positif, et un calculateur de position (20, 120), dans lequel le calculateur de position (20, 120) comprend une interface de système (24, 124), une unité arithmétique série (25, 125), et pour chaque capteur de position (10.1, 10.2, 100.1, 100.2, 100.3, 100.4), une interface de calculateur (22.1, 22.2, 122.1, 122.2, 122.3, 122.4), dans lequel
• les interfaces de calculateur (22.1, 22.2, 122.1, 122.2, 122.3, 122.4) sont reliées par l'intermédiaire de canaux de transmission de données (14.1, 14.2, 114.1, 114.2, 114.3, 114.4) à des interfaces d'appareil (12.1, 12.2, 112.1, 112.2, 112.3, 112.4) correspondantes des capteurs de position (10.1, 10.2, 100.1, 100.2, 100.3, 100.4) en vue d'une transmission de données,
• l'interface de système (24, 124) est reliée par l'intermédiaire d'un canal de transmission de données externe (51) à un appareil de commande (50), et des commandes de demande de position externes (XR) qui proviennent de l'appareil de commande (50) sont retransmises par l'interface de système (24, 124) aux interfaces de calculateur (22.1, 22.2, 122.1, 122.2, 122.3, 122.4), et des valeurs de position moyennées (M) sont sorties en série à destination de l'appareil de commande (50),
• suite à l'arrivée d'une commande de demande de position (XR), les interfaces de calculateur (22.1, 22.2, 122.1, 122.2, 122.3, 122.4) envoient à leur tour des commandes de demande de position (RA, RB, RC, RD) aux capteurs de position (10.1, 10.2, 100.1, 100.2, 100.3, 100.4),
• suite à l'arrivée d'une commande de demande de position (RA, RB, RC, RD), dans les capteurs de position (10.1, 10.2, 100.1, 100.2, 100.3, 100.4), respectivement une valeur de position (A, B, C, D) d'une largeur de mot de n bits est générée et sortie en série par l'intermédiaire de l'interface d'appareil (12.1, 12.2, 112.1, 112.2, 112.3, 112.4) à destination du calculateur de position (20, 120),
• les interfaces de calculateur (22.1, 22.2, 122.1, 122.2, 122.3, 122.4) reçoivent la valeur de position respective (A, B, C, D) et la sortent en série à destination de l'unité arithmétique série (25, 125), et
• dans l'unité arithmétique série (25, 125), la valeur de position moyennée (M) est calculée en série à partir des valeurs de position (A, B, C, D) et est sortie à destination de l'interface de système (24, 124) pour la sortir à destination de l'appareil de commande (50).

7. Procédé selon la revendication 6, dans lequel l'unité arithmétique série (25, 125) comprend un étage d'entrée (26, 126), au moins un additionneur (27, 127.1, 127.2, 127.3) et un étage de sortie (28, 128), dans lequel
• l'étage d'entrée (26, 126) commute simultanément des valeurs de position (A, B, C, D) provenant des interfaces de calculateur (22.1, 22.2, 122.1, 122.2, 122.3, 122.4) et les sort en série sous forme de valeurs de position synchronisées (AS, BS, CS, DS) à destination dudit au moins un additionneur (27, 127.1, 127.2, 127.3),
• ledit au moins un additionneur (27, 127.1, 127.2, 127.3) additionne en série par bit les valeurs de position synchronisées (AS, BS, CS, DS) et sort en série une valeur cumulée (S) à destination de l'étage de sortie (28, 128), et
• l'étage de sortie (28, 128) divise la valeur cumulée (S) par le nombre des valeurs de position et sort en série le résultat sous la forme d'une valeur de position moyennée (M) d'une largeur de mot de n bits à destination de l'interface de système (24, 124).

8. Procédé selon la revendication 7, dans lequel les valeurs de position (A, B, C D) du système de mesure de position présentent une largeur de mot de n bits et une plage de valeurs récurrente périodiquement de 0 à 2^(n-1), et l'étage d'entrée (26, 126), au cas où au moins l'une des valeurs de position (A, B, C, D) amenées à celle-ci se trouverait avant un point de discontinuité dans la courbe de valeurs et au moins l'une des valeurs de position (A, B, C, D) restantes se trouverait après un point de discontinuité dans la courbe de valeurs, effectue une extension de plage de valeurs virtuelle autour d'un point binaire, et la peuple avec un « 0 » logique pour des valeurs de position (A, B, C, D) qui se trouvent avant le point de discontinuité dans la courbe de valeurs, et la peuple avec un « 1 » logique pour des valeurs de position (A, B, C, D) qui se trouvent après le point de discontinuité de la courbe de valeurs.

9. Procédé selon l'une quelconque des revendications 7 ou 8, dans lequel l'unité arithmétique série (25, 125) comprend en outre un générateur d'horloge (29, 129) qui alimente l'étage d'entrée (26, 126) et/ou ledit au moins additionneur (27, 127.1, 127.2, 127.3) et/ou l'étage de sortie (28, 128) avec un signal d'horloge (CLK).
